# EUROPÄISCHE PATENTSCHRIFT

(11) **EP 3 872 921 B1**
(45) Veröffentlichungstag und Bekanntmachung des Hinweises auf die Patenterteilung: **25.11.2026**
(21) Anmeldenummer: 21158964.3
(22) Anmeldetag: 24.02.2021
(51) Int. Cl.: H01M 10/613, H01M 10/625, H01M 50/242, H01M 50/24, H01M 50/249, F16F 15/08, H01M 10/42

(54) **AKKUMULATOR MIT VIBRATIONSENTKOPPLUNG EINES ZELLPACKS**
ACCUMULATOR WITH VIBRATION DECOUPLING OF A CELL PACK
ACCUMULATEUR À DÉCOUPLAGE DES VIBRATIONS D'UN BLOC ACCUMULATEUR

(30) Priorität: 27.02.2020 DE 102020105242
(43) Veröffentlichungstag der Anmeldung: 01.09.2021
(73) Patentinhaber: Wacker Neuson Produktion GmbH & Co. KG, 85084 Reichertshofen (DE)
(72) Erfinder: BERGER, Rudolf, 82031 Grünwald (DE); DILLER, Patrick, 85107 Baar-Ebenhausen (DE); HALDER, Benjamin, 80803 München (DE)
(74) Vertreter: Müller Hoffmann & Partner

(56) Entgegenhaltungen:
- EP-A1- 3 316 343
- KR-A- 20110 003 912
- US-A1- 2013 017 422

## Beschreibung

Die Erfindung betrifft einen Akkumulator, insbesondere einen Akkumulator mit einem schwingungsentkoppelten Zellpack.

Viele Maschine, insbesondere bewegliche Maschinen, wie zum Beispiel Fahrzeuge, Baumaschinen etc., weisen heutzutage elektrische Antriebe auf, die durch einen elektrischen Energiespeicher, insbesondere eine wiederaufladbare Batterie, mit elektrischem Strom gespeist werden.

Seit einiger Zeit werden wechselbare wiederaufladbare Batterien (Akkumulatoren) auch bei Baugeräten eingesetzt, wie zum Beispiel Vibrationsplatten (Rüttelplatten), Stampfern zur Bodenverdichtung oder Innenrüttler zur Bodenverdichtung. Diese Akkus sind dabei aufgrund der Arbeitswirkung dieser Baugeräte prinzipbedingt erheblichen Vibrationen ausgesetzt.

So sollen vor allem Vibrationsplatten und Stampfer starke Schwingungen mit mitunter großen Amplituden (bei Stampfern) erzeugen, um die gewünschte Verdichtungswirkung für einen zu verdichtenden Boden zu erreichen. Da die Schwingungen von dem jeweiligen Baugerät erzeugt werden, wirken sie entsprechend auch auf das Gerät selbst ein und beanspruchen die Gerätekomponenten, wie z.B. den Akku.

Die Akkumulatoren (nachfolgend auch als Akkus bezeichnet) weisen dabei einen oder mehrere Zellpacks mit meist mehreren wiederaufladbaren Batteriezellen auf, die in einem Gehäuse untergebracht sind. Das Gehäuse kann als eine kompakte Einheit an ein betreffendes Baugerät angesteckt und nach Entleerung wieder abgezogen werden. Zum Beispiel können für ein Baugerät mehrere Wechselakkus bereitgestellt werden, um einen weitgehend ungestörten längeren Betrieb auch dann durchführen zu können, wenn ein Akku entleert ist.

Die Zellpacks (zum Beispiel zwei Zellpacks in einem Akkumulator) können seriell geschaltet werden. Sie werden häufig von einem Metallblech umgeben, um die Batteriezellen vor dem Eindringen von spitzen Gegenständen von außen zu schützen. Die einzelnen Zellen werden von Zellhaltern in ihrer jeweiligen Position gehalten und durch Zellverbinder elektrisch miteinander verbunden.

Die Zellpacks werden in der Regel fest mit dem sie umgebenden Gehäuse verschraubt bzw. verspannt, wodurch die von außen einwirkenden Beschleunigungen direkt übertragen werden. Dies kann zu Ausfällen an einem vom Zellpack vorgesehenen Batteriemanagement-System (BMS) oder an den Zellhaltern bzw. Verbindern führen.

Durch die sehr hohen Beschleunigungen bzw. Vibrationen und Frequenzen auf akkubetriebenen Baumaschinen werden alle Bauteile des Akkus sehr stark beansprucht. Dadurch kann es zu Ausfällen des Akkus kommen, zum Beispiel aufgrund von defekten Lötverbindungen, defekten Schweißverbindungen, Brüchen von Zellhaltern und Beschädigungen der BMS-Elektronik etc.

Aus der KR 2011 0003912 A ist ein Batteriegehäuse mit einem ein Batteriepack umschließenden inneren Gehäuse und einem das innere Gehäuse umschließenden äußeren Gehäuse bekannt. Zwischen dem inneren Gehäuse und dem äußeren Gehäuse sind elastische Elemente vorgesehen, die das innere Gehäuse elastisch tragen.

In der EP 3 316 343 A1 wird ein Batteriemodul mit einem Außengehäuse und einem Batteriemodulgehäuse beschrieben. Zwischen dem Batteriemodulgehäuse und dem Außengehäuse ist wenigstens ein Dämpfungselement angeordnet.

Die US 2013/017422 A1 offenbart eine Batteriepackanordnung, mit einem inneren Pack und einem das innere Pack aufnehmenden äußeren Pack, wobei zwischen dem inneren Pack und dem äußeren Pack Schockabsorber angeordnet sind.

Der Erfindung liegt die Aufgabe zugrunde, einen Akkumulator anzugeben, bei dem das Risiko von vibrationsbedingten Beschädigungen und damit verbundenen Ausfällen verringert wird.

Die Aufgabe wird erfindungsgemäß gelöst durch einen Akkumulator mit den Merkmalen von Anspruch 1. Vorteilhafte Ausgestaltungen sind in den abhängigen Ansprüchen angegeben.

Es wird ein Akkumulator angegeben, mit wenigstens einem Zellpack, mit wenigstens einer wiederaufladbaren Batteriezelle, mit einem den Zellpack umschließenden Gehäuse, und mit einer Schwingungsentkopplungsvorrichtung, wobei wenigstens eine Außenabmessung des Zellpacks kleiner ist als eine korrespondierende Innenabmessung des Gehäuses, derart, dass in diesem Bereich ein Zwischenraum zwischen dem Zellpack und dem Gehäuse besteht, und wobei die Schwingungsentkopplungsvorrichtung wenigstens ein Schwingungsentkopplungselement auf weist, das in dem Zwischenraum zwischen dem Zellpack und dem Gehäuse angeordnet ist.

Ein Zellpack kann mehrere Batteriezellen umfassen, die zum Beispiel durch Zellhalter in ihrer jeweiligen Position gehalten werden und untereinander elektrisch, zum Beispiel in Serie, verbunden sind. Der Akkumulator kann dementsprechend auch mehrere Zellpacks aufweisen, die in dem den einzelnen Zellpack oder die mehreren Zellpacks umschließenden Gehäuse untergebracht sind. An wenigstens einer Innenseite der Gehäusewandung ist ein Abstand zwischen dem Zellpack und der korrespondierenden Innenwand des Gehäuses verwirklicht, in dem das Schwingungsentkopplungselement angeordnet ist.

Wenn nachfolgend von einem Zellpack die Rede ist, ist darunter zu verstehen, dass sich die jeweiligen Merkmale auch auf mehrere Zellpacks beziehen können.

Dabei ist davon auszugehen, dass in der Regel in einem Akkumulator mehrere Zellpacks vorgesehen sind.

Der Begriff Zellpack ist somit übergeordnet zu verstehen, und kann auch mehrere Einzel-Zellpacks umfassen, die ihrerseits wiederum die einzelnen Batteriezellen aufweisen.

Das Schwingungsentkopplungselement gewährleistet, dass es keinen direkten Kontakt zwischen dem Zellpack und dem Gehäuse gibt. Als Schwingungsentkopplungselement eignet sich zum Beispiel ein Gummielement, wie eine Gummieinlage, eine Gummimatte etc. Das Schwingungsentkopplungselement kann auch auf andere Weise realisiert werden, zum Beispiel durch entsprechend gestaltete Schaumelemente, Schaummatten usw.

Die Schwingungsentkopplungselemente können dementsprechend an die Innenwände des Gehäuses angepasst werden, so dass sie jeweils das Negativ zum Gehäuse abbilden.

Bei einer Ausführungsform können alle Seiten des Zellpacks von dem Gehäuse mit Abstand umschlossen sein, derart, dass auf allen Seiten des Zellpacks ein jeweiliger Zwischenraum zwischen dem Zellpack und der jeweils gegenüberliegenden Gehäuseinnenwand besteht. Die Seiten des Zellpacks können dabei insbesondere die geometrischen Seiten eines Quaders, also sechs Seiten sein, wobei auch Abstufungen etc. möglich sind. Insbesondere kann auch die Oberseite des Zellpacks einen Abstand zum Gehäuse aufweisen.

Dabei können in sämtlichen Zwischenräumen Schwingungsentkopplungselemente angeordnet sein. Die Schwingungsentkopplungselemente halten den Zellpack (oder auch die mehreren Zellpacks) auf Abstand von den Gehäuseinnenwänden. Insbesondere kann der Zellpack durch die ihn umgebenden Schwingungsentkopplungselemente fest, aber elastisch, eingespannt werden. Die elastische Einspannung (Vorspannung) ist demnach groß genug, um einerseits die von außen über das Gehäuse eingeleiteten Schwingungen wirksam vom Zellpack im Inneren fernzuhalten und andererseits den Zellpack aber stabil in seiner Position zu halten.

Dabei ist es nicht erforderlich, dass die Außenflächen des Zellpacks bzw. die Innenseiten des Gehäuses vollständig mit Schwingungsentkopplungselementen abgedeckt sind. Vielmehr können die Schwingungsentkopplungselemente sinnvollerweise auch nur an den Stellen und an den Flächen vorgesehen sein, über die Schwingungseinträge möglich sind.

Insbesondere kann es zweckmäßig sein, die Schwingungsentkopplungselemente und die Abstände zwischen Gehäuse und Zellpack möglichst groß zu gestalten, um eine maximale Entkopplung zu erreichen. Je größer der Weg sein kann, der für die Relativbewegung zwischen Gehäuse und Zellpack genutzt werden kann, desto effektiver ist die Entkopplungswirkung.

Die jeweiligen Abstände zwischen Zellpack und Innenwand des Gehäuses können wenigstens 2 mm betragen. Bevorzugt beträgt der Abstand zwischen 2 und 10 mm.

Die Abstände sind demnach groß genug zu wählen, um die Schwingungsentkopplungselemente zwischen Gehäuse und Zellpack einzulegen. Zudem ist es für eine wirksame Schwingungsentkopplung notwendig, dass sich der Zellpack und das Gehäuse relativ zueinander bewegen können.

Die Schwingungsentkopplungselemente können derart in den Zwischenräumen angeordnet sein, dass von außen über das Gehäuse einwirkende Schwingungen in allen Raumrichtungen durch die jeweiligen Schwingungsentkopplungselemente aufgenommen werden. Insbesondere bei Baugeräten mit Schwingungserregern bzw. Stampfmechanismen, wie sie bei Vibrationsplatten, Stampfern etc. vorhanden sind, können im Betrieb Schwingungen in unterschiedlichen Richtungen wirken. Dementsprechend sollten die Schwingungsentkopplungselemente im jeweiligen Schwingungsweg zwischen Gehäuse und Zellpack angeordnet sein, um eine Relativbewegung zwischen Gehäuse und Zellpack zuzulassen, so dass die von außen über das Gehäuse einwirkenden Schwingungen nur in reduziertem Maß den empfindlichen Zellpack erreichen.

Die Schwingungen betreffen insbesondere translatorische und/oder rotatorische Bewegungen sowie deren Kombinationen.

Das Gehäuse kann öffenbar sein, um den Zellpack und die jeweiligen Schwingungsentkopplungselemente einsetzen zu können, wobei die Schwingungsentkopplungselemente bei geschlossenem Gehäuse vorgespannt sind. Dementsprechend kann an dem Gehäuse ein Deckel vorgesehen sein, der geöffnet werden kann, um Zugang zu dem Zellpack und den Schwingungsentkopplungselementen zu erhalten. Somit kann das Gehäuse in wenigstens zwei Teile geteilt sein.

Durch die entsprechende Dimensionierung der Abstände zwischen Zellpack und Gehäuse sowie der Schwingungsentkopplungselemente kann bei geschlossenem Deckel die gewünschte Vorspannung der Schwingungsentkopplungselemente präzise erreicht werden, um damit die optimale Schwingungsentkopplungswirkung zu erreichen. Durch die optimale Einstellung der Vorspannung der Schwingungsentkopplungselemente können dementsprechend auch höhere Schwingungsamplituden kompensiert werden.

Das Gehäuse kann ein Oberteil und ein Unterteil aufweisen, wobei das Oberteil und das Unterteil fest miteinander verbindbar sind. Insbesondere können Oberteil und Unterteil miteinander verschraubbar sein oder verklemmbar sein, um sie fest miteinander zu verbinden. Dadurch wird auch die gewünschte Vorspannung der Schwingungsentkopplungselemente erreicht.

Die Vorspannung wird auch dadurch bewirkt, dass das die Oberseite des Zellpacks überdeckende Oberteil mit dem darunter befindlichen Schwingungsentkopplungselement (z.B. einer Gummieinlage bzw. Gummimatte) den Zellpack fest auf die unter dem Zellpack befindliche, ebenfalls als Schwingungsentkopplungselement dienende Unterlage presst.

Das Gehäuse kann Gehäusewände aufweisen, an deren Innenseite Verstärkungsrippen vorgesehen sind, wobei wenigstens zwischen einem Teil der Verstärkungsrippen jeweils wenigstens ein Schwingungsentkopplungselement eingelegt ist. Die Verstärkungsrippen bewirken dementsprechend eine Verstärkung der meist relativ dünnwandig gestalteten Gehäusewände, um die gewünschte Festigkeit zu erreichen. Zwischen den Rippen bilden sich entsprechende Freiräume, die zur Aufnahme der meist flächig gestalteten Schwingungsentkopplungselemente geeignet sind.

Das Gehäuse kann wenigstens eine Lüftungsöffnung aufweisen, wobei im Bereich der Lüftungsöffnung kein Schwingungsentkopplungselement zwischen der Gehäuseinnenwand und dem Zellpack vorgesehen ist. Im Betrieb erwärmen sich die Zellpacks im Inneren eines Akkumulators mitunter stark, so dass eine wirkungsvolle Belüftung der Zellpacks erforderlich ist. Um einen ungehinderten Luftstrom zu einem Zellpack bzw. durch das Gehäuseinnere entlang des Zellpacks zu gewährleisten, sind Lüftungsöffnungen im Gehäuse vorgesehen, die sinnvollerweise nicht durch Schwingungsentkopplungselemente verdeckt werden dürfen. Vielmehr können seitlich neben den Lüftungsöffnungen entsprechende Schwingungsentkopplungselemente angeordnet sein.

Der Zellpack kann ein Batteriemanagement-System aufweisen (BMS), das dementsprechend zusammen mit dem Zellpack ebenfalls schwingungsisoliert gelagert ist. Da das Batteriemanagement-System Elektronikkomponenten aufweist, sind diese wirkungsvoll vor den von außen einwirkenden Schwingungen geschützt.

Der Akkumulator kann eine kompakte Einheit bilden, die in ein Gerät einsetzbar ist. Dazu können an dem Gehäuse entsprechende mechanische Befestigungsmittel und elektrische Kontakte vorgesehen sein, um die Verbindung zwischen Akkumulator bzw. Akkugehäuse und Gerät zu gewährleisten. Die elektrischen und mechanischen Schnittstellen zwischen Akkugehäuse und Gerät sollen dementsprechend ein lösbares Verbinden des Akkus an dem Gerät ermöglichen.

Das den Zellpack und gegebenenfalls die Schnittstellen umgebende Gehäuse (Akkugehäuse) kann eine mechanische Befestigungseinrichtung aufweisen, zum Befestigen des Akkumulators an dem Gerät.

Weiterhin können an dem Gehäuse elektrische Kontakte ausgebildet sein, zum elektrischen Anschließen des Akkumulators an dem Gerät, um elektrischen Strom von dem als Energiespeicher dienenden Zellpack auf einen in dem Gerät vorhandenen Verbraucher, zum Beispiel einen Elektromotor sowie die Geräteelektronik des Geräts, übertragen zu können.

Zudem können an dem Gehäuse elektrische Kontakte ausgebildet sein, die Bestandteil einer Geräteschnittstelle sind, um Daten zwischen dem Akkumulator und dem Gerät übertragen zu können.

Die Gestaltung des Akkumulators in Form einer kompakten Einheit, die insbesondere in dem Gehäuse untergebracht ist, erlaubt eine leichte Auswechselbarkeit an dem Gerät.

Bei einer Variante kann die Schwingungsentkopplungsvorrichtung wenigstens ein Schwingungsentkopplungselement aufweisen, das luftdurchlässig ist. Damit kann dieses Schwingungsentkopplungselement auch in Bereichen eingesetzt werden, die von einem Luftstrom durchströmt werden. Insbesondere kann ein derartiges Schwingungsentkopplungselement auch im Bereich einer Lüftungsöffnung angeordnet sein, weil es aufgrund seiner Luftdurchlässigkeit einen Luftstrom passieren lässt.

Die Schwingungsentkopplungsvorrichtung weist wenigstens zwei Schwingungsentkopplungselemente auf, die luftdurchlässig sind, wobei die beiden Schwingungsentkopplungselemente eine unterschiedliche Luftdurchlässigkeit aufweisen können. Durch Anordnung von Schwingungsentkopplungselementen mit unterschiedlicher Luftdurchlässigkeit und damit unterschiedlicher Drosselwirkung hinsichtlich eines Luftstroms kann der Luftstrom in einer gewünschten Weise beeinflusst werden. So wird durch ein Schwingungsentkopplungselement mit hoher Luftdurchlässigkeit und damit niedriger Drosselwirkung den Luftstrom einfacher passieren lassen als ein Schwingungsentkopplungselement mit niedriger Luftdurchlässigkeit und damit hoher Drosselwirkung. Durch Verwendung von Schwingungsentkopplungselementen mit unterschiedlicher Luftdurchlässigkeit kann daher der Luftstrom in einer geeigneten Weise geführt bzw. beeinflusst werden.

Für den Luftstrom stellt ein Schwingungsentkopplungselement mit niedriger Luftdurchlässigkeit ein Strömungshindernis dar, so dass zumindest ein Teil des Luftstroms nicht durch das Schwingungsentkopplungselement hindurchtritt, sondern einen anderen Strömungsweg sucht. Dieser Teil wird also verdrängt und in andere Bereiche gezwungen, die - bei einer ungehinderten Strömung durch das Schwingungsentkopplungselement - nicht oder nur wenig durchströmt würden.

Das Gehäuse kann z.B. zwei Lüftungsöffnungen aufweisen, von denen eine als Lufteinlass und eine als Luftauslass dienen kann, um einen Kühlluftstrom durch das Innere des Gehäuses zu führen, zum Kühlen des Zellpacks. Dabei kann wenigstens ein Teil des Kühlluftstroms durch wenigstens eines der Schwingungsentkopplungselemente geführt werden.

Um den Zellpack im Inneren des Gehäuses optimal zu kühlen, sollte er möglichst gleichmäßig von dem Kühlluftstrom umströmt werden. Dieser Luftstrom wird aber immer die Tendenz haben, den Weg des geringsten Widerstands zu suchen und damit auf dem kürzest möglichen, Strömungshindernis-freien Weg zwischen Lufteinlass und Luftauslass strömen.

Indem der Kühlluftstrom jedoch verschiedene Schwingungsentkopplungselemente mit unterschiedlichen Luftdurchlässigkeiten und damit verschiedenen Strömungswiderständen (Drosselwirkungen) durchströmen muss, kann der Weg des Kühlluftstroms, seine Verteilung, seine Strömungsrichtung und seine Intensität beeinflusst werden. Auf diese Weise ist es möglich, den Kühlluftstrom bzw. einen Teil des Kühlluftstroms auch in Bereiche im Inneren des Gehäuses zu zwingen, die bei einem unbeeinflussten Luftstrom nicht oder nur wenig durchströmt würden. Damit kann der Zellpack auf allen gewünschten Seiten gekühlt und eine homogene Temperierung des Akkumulators erreicht werden.

Wenigstens eines der Schwingungsentkopplungselemente oder auch mehrere der Schwingungsentkopplungselemente erfüllen somit nicht nur die Funktion einer Schwingungsentkopplung sondern auch eine Beeinflussung der Luftströmung durch eine Drosselwirkung wegen unterschiedlicher Luftdurchlässigkeit.

Es können eines oder mehrere oder alle Schwingungsentkopplungselemente eine Luftdurchlässigkeit aufweisen. Dabei ist es auch möglich, dass Schwingungsentkopplungselemente keine Luftdurchlässigkeit aufweisen, wenn dies nicht erforderlich ist.

Diese und weitere Vorteile und Merkmale werden nachfolgend anhand von Beispielen unter Zuhilfenahme der begleitenden Figuren näher erläutert. Es zeigen:
- **Fig. 1**: einen schematischen Vertikalschnitt durch einen erfindungsgemäßen Akkumulator; und
- **Fig. 2**: eine Variante zu dem Aufbau von Fig. 1.

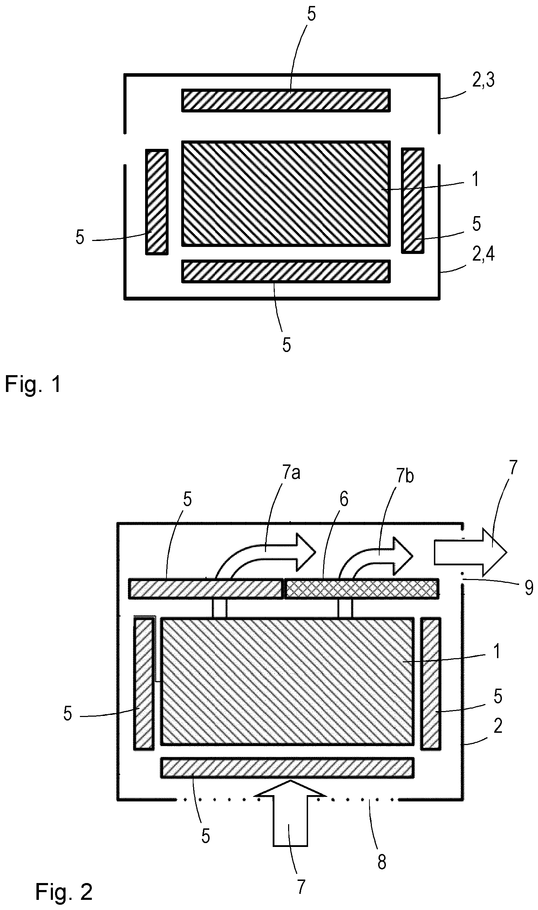

Fig. 1 zeigt demnach einen vertikal geschnittenen, noch nicht zusammengebauten Akkumulator in Explosionsdarstellung.

Der Akkumulator weist einen Zellpack 1 auf. Der Zellpack 1 umfasst mehrere wiederaufladbare Batteriezellen (nicht dargestellt). Er kann auch mehrere Unter-Zellpacks umfassen, die jedoch ebenfalls aus Übersichtlichkeitsgründen nicht dargestellt sind. Mit Zellpack ist dementsprechend die kompakte Einheit aller Batteriezellen gemeint.

Der Zellpack 1 wird von einem Gehäuse 2 umschlossen, das zweigeteilt ist und ein Oberteil 3 sowie ein Unterteil 4 aufweist.

Die Innenabmessungen des Gehäuses 2 bzw. des Oberteils 3 und des Unterteils 4 sind im Verhältnis zu den Außenabmessungen des Zellpacks 1 derart gewählt, dass Zwischenräume ausgebildet sind, in die entsprechend geeignet dimensionierte Gummieinlagen 5 eingelegt werden können, die als Schwingungsentkopplungselemente dienen.

Die Gummieinlagen 5 sind auf allen Seiten des Zellpacks 1 angeordnet, also nicht nur auf den in Fig. 1 gezeigten vier Seiten (Oberseite, Unterseite, rechte Seite, linke Seite), sondern auf allen sechs Raumseiten (dementsprechend auch Vorderseite und Rückseite).

Bestandteil des Zellpacks 1 ist auch ein nicht dargestelltes Batteriemanagement-System, das Elektronikkomponenten aufweist und die Aufladung und Entladung der Batteriezellen in an sich bekannter Weise handhabt.

Um die Luftführung für den Zellpack 1 nicht zu beeinträchtigen, sollten die Gummieinlagen 5 entsprechend optimiert ausgelegt sein. Insbesondere sollten sie so wenig wie möglich eine Wärmeisolierung des Zellpacks 1 herbeiführen und stattdessen einen ausreichenden Luftstrom zu dem Zellpack 1 zu gewährleisten.

Die Gummieinlagen 5 erlauben eine Relativbewegung zwischen dem Zellpack 1 und dem den Zellpack 1 umschließenden Gehäuse 2. Dadurch kann erreicht werden, dass der Zellpack 1 wirksam von auf das Gehäuse 2 einwirkenden Schwingungen entkoppelt wird. Die z.B. von einem den Akkumulator tragenden Baugerät - wie einer Vibrationsplatte oder einem Stampfer - erzeugten Schwingungen können zwar voll auf das Gehäuse 2 einwirken. Jedoch werden diese Schwingungen nur teilweise bzw. stark vermindert über die Gummieinlagen 5 auf den innen liegenden Zellpack 1 übertragen.

Fig. 2 zeigt eine andere Variante für den Akkumulator von Fig. 1

Dabei sind als Schwingungsentkopplungselemente dienende Gummieinlagen 5, 6 vorgesehen, die eine bestimmte Luftdurchlässigkeit aufweisen. Während die Mehrzahl der Gummieinlagen 5 eine hohe Luftdurchlässigkeit und damit für einen durch die Gummieinlagen 5 strömenden Luftstrom eine geringe Drosselwirkung aufweist, ist eine Gummieinlage 6 vorgesehen, mit einer verminderten Luftdurchlässigkeit aufgrund einer erhöhten Drosselwirkung hinsichtlich des die Gummieinlage 6 durchströmenden Luftstroms. Die erhöhte Drosselwirkung kann z.B. dadurch erreicht werden, dass Luftporen in der Gummieinlage 6 gegenüber den anderen Gummieinlagen 5 verkleinert werden.

Mithilfe der Gummieinlage 6 mit verminderter Luftdurchlässigkeit kann insbesondere der Verlauf eines Kühlluftstroms 7 im Inneren des Gehäuses 2 beeinflusst werden. Der Kühlluftstrom 7 kann z.B. über einen Lufteinlass 8 in das Innere des Gehäuses 2 und über einen Luftauslass 9 wieder aus dem Gehäuse 2 herausgeführt werden. Die Strömung kann z.B. durch ein außerhalb des Gehäuses 2 vorgesehenes Gebläse bewirkt werden.

Ohne Beeinflussung würde der Kühlluftstrom 7 immer den Weg des geringsten Widerstandes "wählen" und möglichst auf kürzestem Wege vom Lufteinlass 8 über den Zellpack 1 zum Luftauslass 9 strömen. Dadurch würde der größte Teil des Kühlluftstroms 7 in Fig. 2 den rechten Teil des Zellpacks 1 und den rechten Teil des Gehäuses 2 durchströmen. Der linke Teil des Gehäuses 2 würde kaum oder, jedenfalls in den Ecken, gar nicht mit Kühlluft durchströmt. Die dort angeordneten Batteriezellen würden keine wirksame Kühlung erfahren.

Wenn aber - wie in Fig. 2 gezeigt - z.B. stromab vom Zellpack 1 zwei unterschiedliche Gummieinlagen 5, 6 mit unterschiedlicher Luftdurchlässigkeit und damit Drosselwirkung angeordnet sind, wird der Kühlluftstrom durch die geringere Luftdurchlässigkeit der (rechten) Gummieinlage 6 in den linken Bereich des Gehäuses 2 gezwungen. Dementsprechend durchströmt ein größerer Teil 7a des Kühlluftstroms 7 den linken Teil und die oberhalb von dem Zellpack 1 angeordnete Gummieinlage 5 mit hoher Luftdurchlässigkeit. Nur ein kleinerer Teil 7b des Kühlluftstroms gelangt durch die als Strömungshindernis dienende Gummieinlage 6 mit geringerer Luftdurchlässigkeit.

Damit kann eine wirksame Kühlung des gesamten Innenraums des Gehäuses 2 und eine homogene Temperierung des Akkumulators erreicht werden.

## Patentansprüche

1. Akkumulator, mit
- wenigstens einem Zellpack (1) mit wenigstens einer wiederaufladbaren Batteriezelle;
- einem den Zellpack (1) umschließenden Gehäuse (2); und mit
- einer Schwingungsentkopplungsvorrichtung;
wobei
- wenigstens eine Außenabmessung des Zellpacks (1) kleiner ist als eine korrespondierende Innenabmessung des Gehäuses (2), derart, dass in diesem Bereich ein Zwischenraum zwischen dem Zellpack (1) und dem Gehäuse (2) besteht; und wobei
- die Schwingungsentkopplungsvorrichtung wenigstens ein Schwingungsentkopplungselement (5) aufweist, das in dem Zwischenraum zwischen dem Zellpack (1) und dem Gehäuse (2) angeordnet ist;
**dadurch gekennzeichnet, dass**
- die Schwingungsentkopplungsvorrichtung wenigstens zwei Schwingungsentkopplungselemente (5, 6) aufweist, die luftdurchlässig sind, wobei die beiden Schwingungsentkopplungselemente (5, 6) eine unterschiedliche Luftdurchlässigkeit aufweisen.

2. Akkumulator nach Anspruch 1, wobei alle Seiten des Zellpacks (1) von dem Gehäuse (2) mit Abstand umschlossen sind, derart, dass auf allen Seiten des Zellpacks (1) ein jeweiliger Zwischenraum zwischen dem Zellpack (1) und der jeweils gegenüberliegenden Gehäuseinnenwand besteht.

3. Akkumulator nach einem der vorstehenden Ansprüche, wobei in sämtlichen Zwischenräumen Schwingungsentkopplungselemente (5) angeordnet sind.

4. Akkumulator nach einem der vorstehenden Ansprüche, wobei die jeweiligen Abstände zwischen dem Zellpack (1) und der Innenwand des Gehäuses (2) zwischen 2 und 10 mm betragen.

5. Akkumulator nach einem der vorstehenden Ansprüche, wobei die Schwingungsentkopplungselemente (5) derart in den Zwischenräumen angeordnet sind, dass von außen über das Gehäuse (2) einwirkende Schwingungen in allen Raumrichtungen durch die jeweiligen Schwingungsentkopplungselemente (5) aufgenommen werden.

6. Akkumulator nach einem der vorstehenden Ansprüche, wobei
- das Gehäuse (2) öffenbar ist, um den Zellpack (1) und die jeweiligen Schwingungsentkopplungselemente (5) einzusetzen; und wobei
- die Schwingungsentkopplungselemente (5) bei geschlossenem Gehäuse (2) vorgespannt sind.

7. Akkumulator nach einem der vorstehenden Ansprüche, wobei
- das Gehäuse (2) ein Oberteil (3) und ein Unterteil (4) aufweist; und wobei
- das Oberteil (3) und das Unterteil (4) miteinander fest verbindbar sind.

8. Akkumulator nach einem der vorstehenden Ansprüche, wobei
- das Gehäuse (2) Gehäusewände aufweist, an deren Innenseite Verstärkungsrippen vorgesehen sind; und wobei
- wenigstens zwischen einem Teil der Verstärkungsrippen jeweils wenigstens ein Schwingungsentkopplungselement (5) eingelegt ist.

9. Akkumulator nach einem der vorstehenden Ansprüche, wobei
- das Gehäuse (2) wenigstens eine Lüftungsöffnung aufweist; und wobei
- im Bereich der Lüftungsöffnung kein Schwingungsentkopplungselement (5) zwischen der Gehäuseinnenwand und dem Zellpack (1) vorgesehen ist.

10. Akkumulator nach einem der vorstehenden Ansprüche, wobei der Zellpack (1) ein Batteriemanagement-System aufweist.

11. Akkumulator nach einem der vorstehenden Ansprüche, wobei
- das Gehäuse (2) zwei Lüftungsöffnungen aufweist, von denen eine als Lufteinlass (8) und eine als Luftauslass (9) dient, um einen Kühlluftstrom (7) durch das Innere des Gehäuses (2) zu führen, zum Kühlen des Zellpacks (1); und wobei
- wenigstens ein Teil (7a, 7b) des Kühlluftstroms (7) durch wenigstens eines der Schwingungsentkopplungselemente (5, 6) führbar ist.

## Claims

1. Accumulator, comprising
- at least one cell pack (1) with at least one rechargeable battery cell;
- a housing (2) which surrounds the cell pack (1); and comprising
- a vibration decoupling device;
wherein
- at least one outer dimension of the cell pack (1) is smaller than a corresponding inner dimension of the housing (2) such that in this region there is an intermediate space between the cell pack (1) and the housing (2); and
wherein
- the vibration decoupling device has at least one vibration decoupling element (5) which is arranged in the intermediate space between the cell pack (1) and the housing (2);
**characterised in that**
- the vibration decoupling device has at least two vibration decoupling elements (5, 6) which are air-permeable, wherein the two vibration decoupling elements (5, 6) have a different air permeability.

2. Accumulator as claimed in claim 1, wherein all of the sides of the cell pack (1) are surrounded by the housing (2) at a spaced interval such that on all sides of the cell pack (1) there is a respective intermediate space between the cell pack (1) and the respectively opposite housing inner wall.

3. Accumulator as claimed in any one of the preceding claims, wherein vibration decoupling elements (5) are arranged in all of the intermediate spaces.

4. Accumulator as claimed in any one of the preceding claims, wherein the respective spaced intervals between the cell pack (1) and the inner wall of the housing (2) are between 2 and 10 mm.

5. Accumulator as claimed in any one of the preceding claims, wherein the vibration decoupling elements (5) are arranged in the intermediate spaces such that vibrations acting from the outside over the housing (2) are absorbed in all spatial directions by the respective vibration decoupling elements (5).

6. Accumulator as claimed in any one of the preceding claims, wherein
- the housing (2) can be opened in order to insert the cell pack (1) and the respective vibration decoupling elements (5); and wherein
- the vibration decoupling elements (5) are pretensioned when the housing (2) is closed.

7. Accumulator as claimed in any one of the preceding claims, wherein
- the housing (2) has an upper part (3) and a lower part (4); and wherein
- the upper part (3) and the lower part (4) are fixedly connectable to one another.

8. Accumulator as claimed in any one of the preceding claims, wherein
- the housing (2) has housing walls, on the inner side of which reinforcement ribs are provided; and wherein
- at least one vibration decoupling element (5) is inserted at least between a part of the reinforcement ribs.

9. Accumulator as claimed in any one of the preceding claims, wherein
- the housing (2) has at least one ventilation opening; and wherein
- no vibration decoupling element (5) is provided between the housing inner wall and the cell pack (1) in the region of the ventilation opening.

10. Accumulator as claimed in any one of the preceding claims, wherein the cell pack (1) has a battery management system.

11. Accumulator as claimed in any one of the preceding claims, wherein
- the housing (2) has two ventilation openings, of which one serves as an air inlet (8) and one serves as an air outlet (9) in order to guide a cooling air flow (7) through the interior of the housing (2) for cooling the cell pack (1); and wherein
- at least one part (7a, 7b) of the cooling air flow (7) can be guided through at least one of the vibration decoupling elements (5, 6).

## Revendications

1. Accumulateur, comprenant
- au moins un bloc de cellules (1) comprenant au moins une cellule de batterie rechargeable;
- un boîtier (2) entourant le bloc de cellules (1) ; et
- un dispositif de découplage des vibrations ;
dans lequel
- au moins une dimension extérieure du bloc de cellules (1) est inférieure à une dimension intérieure correspondante du boîtier (2), de sorte qu'un espace intermédiaire existe dans cette zone entre le bloc de cellules (1) et le boîtier (2) ; et
dans lequel
- le dispositif de découplage des vibrations présente au moins un élément de découplage des vibrations (5) disposé dans l'espace intermédiaire entre le bloc de cellules (1) et le boîtier (2) ; **caractérisé en ce que**
- le dispositif de découplage des vibrations présente au moins deux éléments de découplage des vibrations (5, 6) qui sont perméables à l'air, les deux éléments de découplage des vibrations (5, 6) présentant une perméabilité à l'air différente.

2. Accumulateur selon la revendication 1, dans lequel toutes les faces du bloc de cellules (1) sont entourées par le boîtier (2) avec un écart, de sorte que sur toutes les faces du bloc de cellules (1) un espace intermédiaire respectif existe entre le bloc de cellules (1) et la paroi intérieure du boîtier opposée.

3. Accumulateur selon l'une des revendications précédentes, dans lequel des éléments de découplage des vibrations (5) sont disposés dans tous les espaces intermédiaires.

4. Accumulateur selon l'une des revendications précédentes, dans lequel les écarts respectifs entre le bloc de cellules (1) et la paroi intérieure du boîtier (2) sont compris entre 2 et 10 mm.

5. Accumulateur selon l'une des revendications précédentes, dans lequel les éléments de découplage des vibrations (5) sont disposés dans les espaces intermédiaires de telle sorte que les vibrations agissant de l'extérieur via le boîtier (2) sont absorbées dans toutes les directions spatiales par les éléments de découplage des vibrations (5) respectifs.

6. Accumulateur selon l'une des revendications précédentes, dans lequel
- le boîtier (2) est ouvert pour insérer le bloc de cellules (1) et les éléments de découplage des vibrations (5) respectifs ; et dans lequel
- les éléments de découplage des vibrations (5) sont précontraints lorsque le boîtier (2) est fermé.

7. Accumulateur selon l'une des revendications précédentes, dans lequel
- le boîtier (2) présente une partie supérieure (3) et une partie inférieure (4) ; et dans lequel
- la partie supérieure (3) et la partie inférieure (4) peuvent être reliées fermement l'une à l'autre.

8. Accumulateur selon l'une des revendications précédentes, dans lequel
- le boîtier (2) présente des parois de boîtier, sur la face intérieure desquelles des nervures de renforcement sont prévues ; et dans lequel
- au moins entre une partie des nervures de renforcement, au moins un élément de découplage des vibrations (5) est inséré respectivement.

9. Accumulateur selon l'une des revendications précédentes, dans lequel
- le boîtier (2) présente au moins un orifice de ventilation ; et dans lequel
- dans la zone de l'orifice de ventilation, aucun élément de découplage des vibrations (5) n'est prévu entre la paroi intérieure du boîtier et le bloc de cellules (1).

10. Accumulateur selon l'une des revendications précédentes, dans lequel le bloc de cellules (1) présente un système de gestion de batterie.

11. Accumulateur selon l'une des revendications précédentes, dans lequel
- le boîtier (2) présente deux orifices de ventilation, dont l'un sert d'entrée d'air (8) et l'autre de sortie d'air (9), pour conduire un flux d'air de refroidissement (7) à travers l'intérieur du boîtier (2), pour refroidir le bloc de cellules (1) ; et dans lequel
- au moins une partie (7a, 7b) du flux d'air de refroidissement (7) peut être conduite à travers au moins un des éléments de découplage des vibrations (5, 6).
